# EUROPEAN PATENT APPLICATION

(11) **EP 3 043 104 A1**
(43) Date of publication of application: **13.07.2016**
(21) Application number: 15150662.3
(22) Date of filing: 09.01.2015
(51) Int. Cl.: F16M 11/04, A47F 7/024, E05B 73/00, F16M 13/00, H04M 1/04

(54) **Tablet holding housing for a tablet holding system**

(71) Applicant: Haugaard, Philip Christian, 6652 Tegna (CH)
(72) Inventor: Nielsen, Jonny Bjerregaard, 4000 Roskilde (DK); Haugaard, Andreas Christian, 3050 Humlebæk (DK)
(74) Representative: Chas. Hude A/S

(57) **Abstract**

The present invention relates to a tablet holding housing (1) to be used as part of a tablet holding system which comprises a mounting fixture, and wherein said housing is for holding a tablet and for mounting to said mounting fixture. The housing (1) comprises holding elements (3, 5), which are arranged along the periphery of a central element (7), and which are suitable for holding onto the side edges of a tablet and a locking mechanism (9) with a key, said locking mechanism arranged to lock the holding elements so that it is not possible to remove a tablet held in the housing (1), when the locking mechanism is activated. The holding elements (3, 5) are positioned for gripping around opposite edges of the tablet, and the holding elements (3, 5) are mutually displaceable towards or away from each other, whereby tablets of various dimensions can be positioned between the holding elements, and wherein the locking mechanism (9) is for locking said displaceable holding elements (3, 5) at a specific position.

## Description

The present invention relates to a tablet holding housing to be used as part of a tablet holding system which further comprises a mounting fixture, and wherein said housing is for holding and locking a tablet to the housing via a locking mechanism. The locking mechanism is arranged to lock the holding elements so that it is not possible to remove a tablet held in the housing, when the locking mechanism is activated.

By tablet holding system is meant a system which holds a tablet in a desired position. In certain cases, the system can be arranged to allow position of the tablets to be changed, for example by providing a fitting, which can pivot, thereby allowing the tablet to pivot or by arranging the mounting fixture to be displaceable thereby allowing the tablet to change its location. The position, in which the tablet is held, is dependent on the intended use of the tablet holding system.

By tablet is meant an electronic tablet, such as an iPad™ or similar. Tablets are usually rectangular in shape and have a diagonal dimension between 17cm and 35cm. They are usually of reduced thickness, usually less than 3cm, less than 2cm or less than 1.5cm. However, the tablet holding housing of the present invention could also be used with larger tablets or even flat screen TVs or monitors.

By mounting fixture is meant any structure whereto the housing is mounted. Such a mounting fixture could be a cylinder-shaped console, a desk, a wall or any other fixture whereto the tablet holding housing is firmly connected, e.g. via bolts, screws, moulding or similar.

### Description of related art

Many different tablet holding systems are available in the prior art. One nonlimiting example of use of such a tablet holding system is when a tablet is used as a display at an exhibition or in a shop. This is sometimes called a Point of Sale display, or POS display. The tablet can be used to provide interactive communication with visitors/customers at the exhibition or shop. In such situations, it is firstly desired to provide a proper stand so that the tablet is held in a position, where the visitors/customers can effectively use and view the tablet. Secondly, it is desired to ensure that a thief cannot steal the tablet. The tablet holding system should therefore be arranged with some form of locking mechanism to lock the tablet. It is further of interest to provide a stand, where the tablet can be replaced by another tablet having other dimensions. This is of relevance since tablets vary in dimensions both depending on specific versions from one tablet manufacturer or variations being different depending on the tablet manufacturer.

Some examples of tablet holding systems are provided in EP2308355A1 and WO2014006216. Both of these systems use a tablet housing which is specifically dimensioned for housing tablets with specific dimensions.

### Summary of the invention

A first aspect of the present invention is therefore to provide a solution for a tablet holding housing and system as mentioned in the introductory paragraph which is better than the solutions provided in the prior art.

This is provided in that holding elements are arranged along the periphery of the central element of the tablet holding housing, where the holding elements are positioned for gripping around opposite edges of the tablet. The holding elements are mutually displaceable towards or away from each other, whereby tablets of various dimensions can be positioned between the holding elements, and the locking mechanism is for locking said displaceable holding elements at a specific position.

Thereby, tablets of various dimensions can be positioned in the same housing by displacing the holding elements, until the tablet can be positioned between the holding elements, whereafter the holding elements can be displaced towards each other and pressed together, until the tablet is secured between the holding elements. Finally, the position of the holding elements is locked via the locking mechanism. Further, tablets of various dimensions are either the tablet itself or it could be a tablet with a tablet cover, where the dimensions of a tablet with a tablet cover depend both on the type of tablet as well as on the type of tablet cover.

Further, by way of the tablet holding housing of the present invention it is a fast process to unlock and remove the tablet from the tablet holding system and afterwards, the tablet can easily be inserted in the tablet holding housing again. Similarly, the flexibility of the tablet holding housing makes it very fast to replace a tablet with a new tablet, both a tablet having the same dimensions as well as a tablet with different dimensions.

Further, a secure connection is established between the housing and the mounting fixture which ensures that it is not possible to remove the housing or the tablet from the housing without first opening the locking mechanism and removing the tablet. Therefore the locking mechanism needs to be unlocked in order to disassemble the tablet holding system.

In an embodiment, the holding elements comprise a first inner surface being in contact with the tablet edge, when holding a tablet and wherein said inner surface is provided with surface material being more flexible than the material of the holding elements.

Thereby, the flexibility of the surface further secures the tablet by squeezing around the edges without damaging the edge and further, the squeezing ensures a firm grip making it difficult to slide the tablet away from the housing. In an embodiment, the surface material is rubber or silicon, e.g. provided as pads.

In an embodiment, the holding elements for gripping around an edge of a tablet further comprises a second inner surface overlapping the front surface of the tablet. This further ensures that the tablet is locked in the housing also making it difficult to remove the tablet by pushing it upwards and away from the holding means. In addition, the second inner surface functions as a guiding edge when positioning the tablet between the holding elements before displacing the holding elements towards each other.

In an embodiment, the height of said holding elements is adjustable via height adjusting means. Thereby, also tablets with varying thickness can be positioned and locked in the housing. This is possible by varying the heights of the holding elements accordingly.

In an embodiment, at least one of said holding elements is displaceable relative to the central element. Thereby, by only having one displaceable holding element, the other is fixed, and a simple method of obtaining holding elements, which can be mutually displaced towards or away from each other, is provided. Only one of the holding elements needs to be moveable.

In an embodiment, at least one of said holding elements is displaceable via connection to a toothed elongated element engaging with a locking means in said locking mechanism positioned at said central element. Such locking means and the engagement with the toothed elongated element ensure that the holding element connected to the toothed elongated element can be locked at a specific position.

In one embodiment, at least one of said holding elements is displaceable via connection to a saw-toothed elongated element engaging with a pin in said locking mechanism positioned at said central element. This combination ensures that the holding elements can be locked with a specific mutual distance and thus locking a tablet, and the orientation of the saw teething ensures that the holding elements can only be moved towards each other, not away from each other, which further enhances the grip between the tablet and the housing.

As an alternative to using saw teething and a pin, a toothed wheel could be positioned in the locking mechanism engaging with teething on an elongated element. Thereby, by either rotating the wheel or by pushing or pulling the holding elements, the holding elements can be displaced. A small motor could be added for rotating the toothed wheel and by controlling the motor and its rotating direction, the displacement can be controlled. In an embodiment, the motor could be remotely controlled. Further, in such a solution the, locking strength is controlled by the motor, and the motor could e.g. ensure that a specific pressure on the sides of the tablet is maintained, e.g. by measuring and ensuring a specific angular position of the toothed wheel.

In an embodiment, the housing is fastened to the mounting fixture with a screw, which is inserted through the central element in a direction from the tablet facing side of the central element towards the mounting fixture, and wherein the central element and thereby the screw is hidden by a tablet, when a tablet is locked in the housing.

In an embodiment, the central element comprises a hole through which a charging cable for the tablet can be routed. Thereby, the charging cable can be both hidden and protected inside the housing e.g. ensuring the power is supplied to the tablet when mounted in the housing.

In an embodiment, the central element comprises a support surface for supporting the back surface of a tablet, and wherein the support surface is provided with a flexible surface material, such as rubber, e.g. provided as rubber pads. This ensures that the tablet can rest on the surface during mounting and further the rubber optimises the grip between the housing and the tablet due to friction between the rubber and the tablet.

In an embodiment, said locking mechanism is activated via RFID signal, and wherein said key comprises an RFID chip. Thereby, the housing can be electronically locked as an alternative to a mechanical lock.

Further, the invention relates to a tablet holding system comprising a tablet holding housing according to the above.

It should be emphasised that the term "comprises/comprising/comprised of", when used in this specification, is meant to specify the presence of stated features, integers, steps or components, but does not preclude the presence or addition of one or more other features, integers, steps, components or groups thereof.

Furthermore, it should be noted that the claims as currently on file define one scope of protection, but a separate divisional application, which focusses on the combination of a tablet holding housing and the pivot fitting disclosed in the present specification, could also be filed in the future.

### Brief description of the drawings

In the following, the invention will be described in greater detail with reference to embodiments shown by the enclosed figures. It should be emphasised that the embodiments shown are used for example purposes only and should not be used to limit the scope of the invention.
Figure 1 shows a perspective view of a first embodiment of a tablet holding housing according to the present invention.
Figure 2 shows a side view of the tablet holding housing shown in figure 1.
Figure 3 shows a perspective view of the tablet holding housing shown in figure 1, said tablet holding housing holding a tablet.
Figure 4 shows a side view of the tablet holding housing shown in figure 1, said tablet holding housing holding a tablet.
Figure 5 shows a front view of the tablet holding housing shown in figure 1, said tablet holding housing holding a tablet.
Figure 6 shows a rear view of the tablet holding housing shown in figure 1, said tablet holding housing holding a tablet.
Figure 7 shows the locking mechanism locking the holding elements of the tablet holding housing, in the illustration parts have been removed to make inner elements visible for illustration purpose.
Figure 8 shows the holding elements and the means for adjusting the height of the holding elements.

### Detailed description of the embodiments

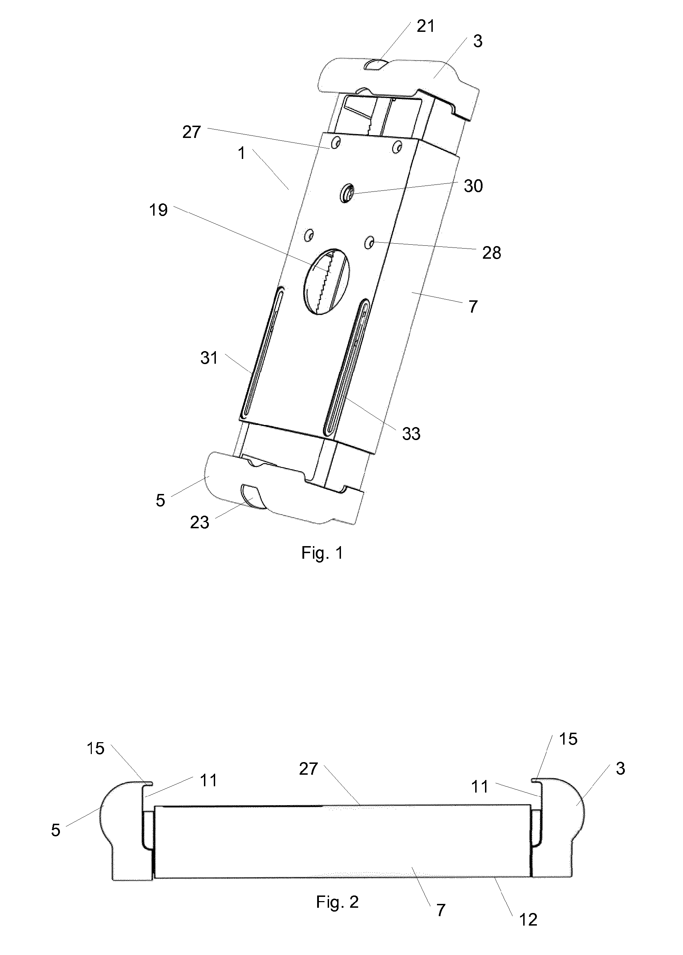

Figures 1-7 show different views and orientations of a first embodiment of a tablet holding housing according to the invention. It should be noted that the embodiment shown in the figures discloses a number of other inventions which could be the subject of divisional applications.

The embodiment of the tablet holding housing 1 is shown both with and without a tablet 2. The tablet holding housing further has a central element 7 and holding elements 3, 5 at opposite ends of the central element 7. In the present embodiment, the tablet 2 is an iPad™, but it could just as well be another tablet, e.g. a Windows™ or an Android™ tablet. Depending on the type of tablet used, the form of the central element 7 may be different, for example to accommodate different charging connector sizes and locations.

The central element 7 of the present embodiment comprises a support surface 27 which provides the main support for the tablet 2. On two opposing side edges, the holding elements 3, 5 are positioned and arranged to be displaced either towards or away from each other in order to fit a tablet between the holding element 3, 5 and for pressing against opposite edges of the tablet 2 to be held in the tablet holding housing 1.

The central element 7 is shaped as a box, where the holding elements 3, 5 can be slid in or out from the central element 7. The sliding could e.g. be a manual process but as an alternative, the sliding could be automatic via driving means installed to facilitate the displacing of the holding elements 3, 5.

As indicated in figure 1 a saw-toothed elongated element 19 is connected to the holding element 3 and by engaging with a pin in a locking mechanism 9, the saw-toothed elongated element 19 and thereby the holding element 3 can be locked at a specific position. The saw-toothed elongated element 19 ensures that the holding element 3 can always be pushed towards the holding element 5. Only when the pin of the locking mechanism is deactivated and the pin is not engaging, the holding element 3 may be moved away from the holding element 5. In the illustrated embodiment, the holding element 3 can be gradually regulated towards and away from the holding element 5 and locked at a specific position via a pin in the locking mechanism 9 engaging with the saw-toothed elongated element 3. The support surface has holes 28 for screws connecting the support surface 27 with locking mechanism 9 and further, the support surface has an opening 30 to access the locking mechanism, whereby the locking mechanism can be accessed, e.g. if the locking system is an RFID locking system, where access is needed for reprogramming keys or adding new keys. Further, the support surface is provided with an opening 13 mainly for accessing the rear side 12 of the central element 7 when connecting the rear side 12 to a mounting fixture.

The holding element 5 can also be moved in and out of the central element 7. Two sliding grooves 31, 33 are positioned at each side of the central element 7, and the holding element 5 can be moved in these grooves 31, 33 for fastening at a specific position e.g. via a locking screw or similar (not shown).

In the above, a specific solution is described on how the holding elements 3, 5 can be moved an locked relative to each other. Other solutions could also be used, and both holding elements 3, 5 could e.g. be moveable and lockable via a toothed elongated element as illustrated. In addition, both elements could be moveable and lockable via sliding grooves. An important aspect is that the holding elements 3, 5 can somehow be moved and locked relative to each other, whereby tablets of varying dimensions can be locked in the same tablet holding housing.

In the described embodiment, there will be limitations in relation to how far the locking elements can be moved away from each other and thereby, how large the tablet to be locked can be. This could be solved by using a telescopic arrangement, whereby one or all holding elements are connected to the central elements via telescopic members. Further, the dimensioning of the entire tablet holding housing also influences the range of tablet sizes that can be locked in the housing.

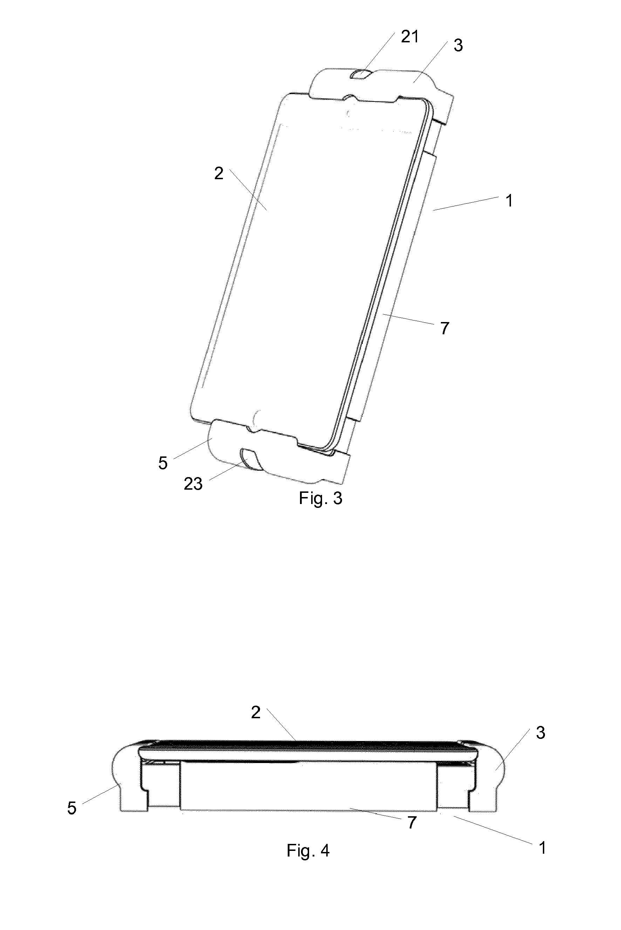

The holding elements 3, 5 (see figures 2 and 4) are shaped to grip around the edges of the tablet 2 and comprise a first inner surface 11 being in contact with the edge of a tablet, when holding a tablet, and a second inner surface 15 overlapping the edge of the front of the tablet 2. Further, the holding elements are shaped with an inner cavity to fit an electrical connector, e.g. being the power supply to the tablet 2. In the embodiment, access openings 21, 23 are provided, whereby it is possible to connect and disconnect the tablet 2 from the power supply after locking the tablet 2 in the housing 1.

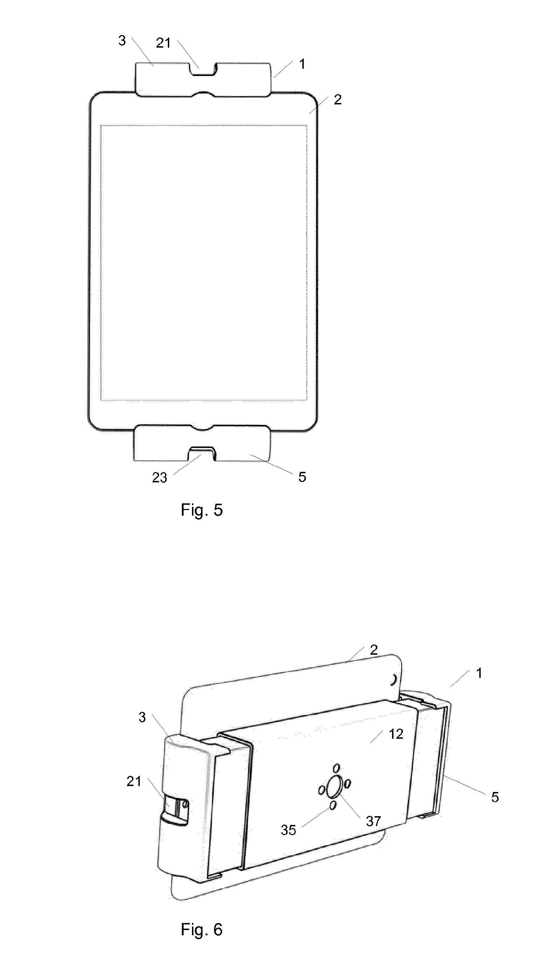

In figure 6, the rear side 12 of the central element is shown. The rear side 12 has a number of openings 35, where screws can be inserted for connecting to a mounting fixture. The screws are inserted and fastened via the opening 13 in the support surface 27 of the housing, and when a tablet 2 is locked in the tablet holding housing 1, these screws cannot be accessed. In addition, the rear side 12 has a wire opening 37. Thereby, wires, such as a power supply, can be directed into the tablet holding housing 1 and thereby hidden in the housing 1.

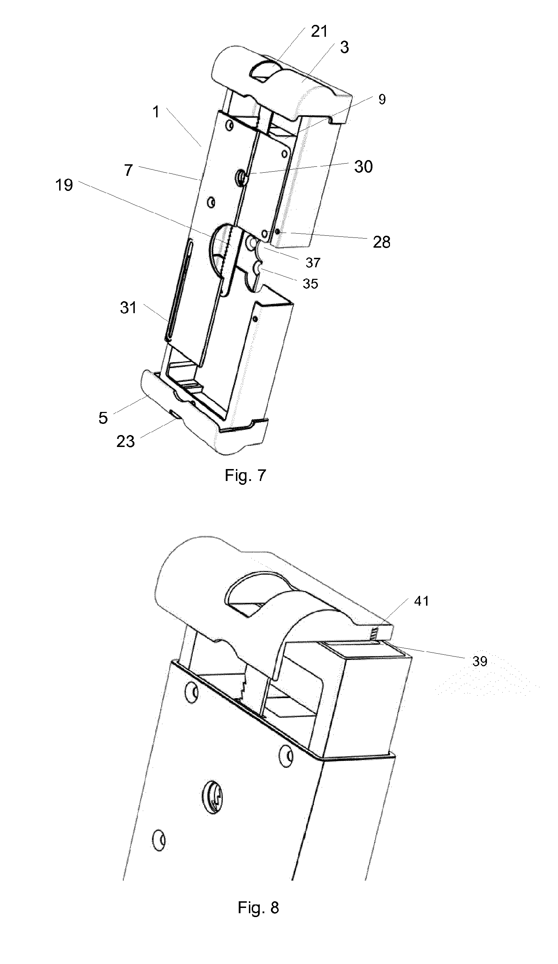

In order for the tablet holding housing to be able to hold tablets with varying thickness, it is possible to adjust the holding elements by having height adjustment means in connection with each holding element 3, 5. An embodiment of such adjustment means is illustrated in figure 8, where only one holding element 3 is shown. The height adjustment means comprises slide grooves 39, and screws 41 could be positioned at each side of the holding element and thereby, the holding element can slide in the grooves 39, and the screw 41 can then be fastened to secure the holding element at a specific position.

It should be noted that both the height adjustment means and the means for displacing and locking the holding means for gripping around the edges of the tablet could be made as a completely automatic solution, where the tablet holding housing opens for positioning of a tablet, and then the holding elements moves towards the tablet until it is in contact with the tablet, and the tablet is locked in the tablet holding housing. This could be via electrical actuators moving the holding elements both with regard to their mutual distance and their height.

### References

1 Tablet holding housing
2 Tablet
3,5 Holding elements
7 Central element
9 Locking mechanism
11 First inner surface of holding elements
12 Rear side of central element
13 Opening for accessing rear side of central element
15 Second inner surface of holding elements
17 Height adjustment means
19 Saw-toothed elongated element
21, 23 Access openings in holding elements
27 Support surface of housing
28 Holes for screws for connecting support surface and locking mechanism
30 Opening to access the locking mechanism
31, 33 Sliding grooves
35 Openings for screws connecting the housing to a mounting fixture
37 Wire opening
39 Slide groove in height adjustment means
41 Screw in height adjustment means

## Claims

1. A tablet holding housing (1) to be used as part of a tablet holding system which further comprises a mounting fixture, and wherein said housing is for holding a tablet (2) and for mounting to said mounting fixture, said housing (1) comprising holding elements (3, 5), which are arranged along the periphery of a central element (7), and which are suitable for holding onto the side edges of a tablet (2), and a locking mechanism (9) arranged to lock the holding elements so that it is not possible to remove a tablet held in the housing (1), when the locking mechanism is activated **characterised in that** the holding elements (3, 5) are positioned for gripping around opposite edges of the tablet (2) and that the holding elements (3, 5) are mutually displaceable towards or away from each other, whereby tablets of various dimensions can be positioned between the holding elements, and wherein the locking mechanism (9) is for locking said displaceable holding elements (3, 5) at a specific position.

2. A tablet holding housing according to claim 1, wherein said holding elements comprise a first inner surface (11) being in contact with the tablet edge when holding a tablet, and wherein said inner surface (11) is provided with surface material (13) being more flexible than the material of the holding elements (3, 5).

3. A tablet holding housing according to claim 2, wherein said surface material is rubber, e.g. provided as rubber pads.

4. A tablet holding housing according to claims 1-3, wherein said holding elements for gripping around an edge of a tablet further comprise a second inner surface (15) overlapping the front surface of the tablet.

5. A tablet holding housing according to claims 1-4, wherein the height of said holding elements (3, 5) is adjustable via height-adjusting means (17).

6. A tablet holding housing according to claims 1-5, wherein at least one of said holding elements (3, 5) is displaceable relative to the central element (7).

7. A tablet holding housing according to claims 1-6, wherein at least one of said holding elements (3, 5) is displaceable via connection to a saw-toothed elongated element (19) engaging with a pin in said locking mechanism (23) positioned at said central element (7).

8. A tablet holding housing according to claims 1-7, wherein the locking mechanism (23) locks said pin at a specific position relative to said saw-toothed elongated element (19), when the locking mechanism (23) is activated.

9. A tablet holding housing according to claims 1-8, wherein the housing (1) is fastened to the mounting fixture with at least one fastening means, such as a screw, which is inserted through the central element (7) in a direction from the tablet facing side of the central element (7) towards the mounting fixture, and wherein the central element (7) and thereby the screw is hidden by a tablet, when a tablet is locked in the housing (1).

10. A tablet holding housing according to claims 1-9, wherein the central element (7) comprises a wire opening (37) through which a charging cable for the tablet can be routed.

11. A tablet holding housing according to claims 1-10, wherein the central element (7) comprises a support surface (27) for supporting the back surface of a tablet, and wherein the support surface is provided with a flexible surface material, such as rubber, e.g. provided as rubber pads.

12. A tablet holding housing according to claims 1-11, wherein said locking mechanism (9) is activated via RFID signal, and wherein said key comprises an RFID chip.

13. A tablet holding system comprising a tablet holding housing according to claims 1-12.
